# EUROPEAN PATENT APPLICATION

(11) **EP 3 232 678 A1**
(43) Date of publication of application: **18.10.2017**
(21) Application number: 15868235.1
(22) Date of filing: 18.06.2015
(51) Int. Cl.: H04N 21/458

(54) **PROMOTION INFORMATION PROCESSING METHOD, DEVICE AND APPARATUS, AND NON-VOLATILE COMPUTER STORAGE MEDIUM**

(30) Priority: 12.12.2014 CN 201410768441
(71) Applicant: Beijing Baidu Netcom Science and Technology Co., Ltd, Beijing 100085 (CN)
(72) Inventor: LI, Gang, Beijing 100085 (CN)
(74) Representative: dompatent von Kreisler Selting Werner - Partnerschaft von Patent- und Rechtsanwälten mbB
(86) International application number: PCT/CN2015/081768
(87) International publication number: WO 2016/090889

(57) **Abstract**

The present disclosure provides a method and apparatus for processing promotional information, an apparatus and a non-volatile computer storage medium. In one aspect, in embodiments of the present disclosure, it is feasible to obtain video information to be played; thereby obtain position information of promotional information included by the video information in the video information; and thereby, according to the position information of promotional information in the video information, not display the promotional information upon playing the video information. Hence, technical solutions provided embodiments of the present disclosure may not display the promotional information in the played video information, and thereby may eliminate adverse influence exerted by inserting promotional information upon playing the video information in the prior art.

## Description

The present disclosure claims priority to the Chinese patent application No.201410768441.6 entitled "Method and Apparatus for Processing Promotional Information" filed on the filing date December 12, 2014, the entire disclosure of which is hereby incorporated by reference in its entirety.

### Field of the Disclosure

The present disclosure relates to the technical field of the Internet technologies, and particularly to a method and apparatus for processing promotional information, an apparatus and a non-volatile computer storage medium.

### Background of the Disclosure

As the Internet technologies develop, more and more users choose to use a terminal such as a personal computer, a mobile phone, a tablet computer, a smart television or the like to view video on the Internet. For the sake of profits, video providers on the Internet usually broadcast various forms of promotional information such as advertisement video or advertisement pictures before playing the video or by interrupting the play during play of the video.

However, these promotional information broadcast by interrupting play is broadcast compulsorily so that the user chooses either to switch to other video or to stop viewing or to wait for completion of the broadcast of the current promotional information. This not only affects the user's viewing experience, but also wastes the user's time, reduces the user's efficiency in viewing the video, and exerts many unfavorable influences.

### Summary of the Disclosure

In view of the above, embodiments of the present disclosure provide a method and apparatus for processing promotional information, an apparatus and a non-volatile computer storage medium, to eliminate adverse influence exerted by inserting promotional information upon playing the video information in the prior art.

According to an aspect of the present disclosure, there is provided a method of processing the promotional information, comprising:
obtaining video information to be played;
obtaining position information of promotional information included by the video information in the video information;
according to the position information of promotional information in the video information, not broadcasting the promotional information upon playing the video information.

The above aspect and any possible implementation mode further provide an implementation mode: the obtaining position information of promotional information included by the video information in the video information comprises:
obtaining a correspondence relationship between the video information and the position information of the promotional information;
based on the correspondence relationship, obtaining the position information of the promotional information included by the video information in the video information.

The above aspect and any possible implementation mode further provide an implementation mode: the obtaining position information of promotional information included by the video information in the video information comprises:
obtaining feature data of the video information;
comparing feature data of preset promotional information with the feature data of the video information, to obtain the position information of the promotional information included by the video information in the video information.

The above aspect and any possible implementation mode further provide an implementation mode: the feature data of the video information is feature data of audio information included by the video information, and feature data of the promotional information is feature data of audio information included by the promotional information; or,
the feature data of the video information is feature data of image information included by the video information, and feature data of the promotional information is feature data of image information included by the promotional information.

The above aspect and any possible implementation mode further provide an implementation mode: the position information of the promotional information included by the video information in the video information comprises a play start moment and a play completion moment of the promotional information in the video information; or
the position information of the promotional information included by the video information in the video information comprises play start frame information and play completion frame information of the promotional information in the video information.

The above aspect and any possible implementation mode further provide an implementation mode: according to the position information of promotional information in the video information, not displaying the promotional information upon playing the video information comprises:
based on the position information of the promotional information in the video information, performing fast-forward operation for the promotional information upon playing the video information.

The above aspect and any possible implementation mode further provide an implementation mode: according to the position information of promotional information in the video information, not displaying the promotional information upon playing the video information comprises:
obtaining multimedia resources to be played;
based on the positional information of the promotional information in the video information, using the multimedia resources to replace the promotional information upon playing the video information;
wherein the multimedia resources may comprise at least one of the following information: picture information, other video information and text information.

According to another aspect of embodiments of the present disclosure, there is provided an apparatus for processing promotional information, comprising:
an information obtaining unit for obtaining video information to be played;
a position determining unit for obtaining position information of promotional information included by the video information in the video information;
an information processing unit for, according to the position information of promotional information in the video information, not displaying the promotional information upon playing the video information.

The above aspect and any possible implementation mode further provide an implementation mode: the information obtaining unit is specifically configured to:
obtain a correspondence relationship between the video information and the position information of the promotional information;
based on the correspondence relationship, obtain the position information of the promotional information included by the video information in the video information.

The above aspect and any possible implementation mode further provide an implementation mode: the information obtaining unit is specifically configured to:
obtain feature data of the video information;
compare feature data of preset promotional information with the feature data of the video information, to obtain the position information of the promotional information included by the video information in the video information.

The above aspect and any possible implementation mode further provide an implementation mode: the feature data of the video information is feature data of audio information included by the video information, and feature data of the promotional information is feature data of audio information included by the promotional information; or,
the feature data of the video information is feature data of image information included by the video information, and feature data of the promotional information is feature data of image information included by the promotional information.

The above aspect and any possible implementation mode further provide an implementation mode: the position information of the promotional information included by the video information in the video information comprises a play start moment and a play completion moment of the promotional information in the video information; or
the position information of the promotional information included by the video information in the video information comprises play start frame information and play completion frame information of the promotional information in the video information.

The above aspect and any possible implementation mode further provide an implementation mode: the information processing unit is specifically configured to:
based on the position information of the promotional information in the video information, perform fast-forward operation for the promotional information upon playing the video information.

The above aspect and any possible implementation mode further provide an implementation mode: the information processing unit is specifically configured to:
obtain multimedia resources to be played;
based on the positional information of the promotional information in the video information, use the multimedia resources to replace the promotional information upon playing the video information;
wherein the multimedia resources may comprise at least one of the following information: picture information, other video information and text information.

According to a further aspect of embodiments of the present disclosure, there is provided an apparatus, comprising
one or more processors;
a memory;
one or more programs stored in the memory and configured to execute the following operations when executed by the one or more processors:
obtaining video information to be played;
obtaining position information of promotional information included by the video information in the video information;
according to the position information of promotional information in the video information, not displaying the promotional information upon playing the video information.

According to a further aspect of the present disclosure, there is provided a non-volatile computer storage medium in which one or more programs are stored, an apparatus being enabled to execute the following operations when said one or more programs are executed by the apparatus:
obtaining video information to be played;
obtaining position information of promotional information included by the video information in the video information;
according to the position information of promotional information in the video information, not displaying the promotional information upon playing the video information.

As can be seen from the above technical solutions, embodiments of the present disclosure have the following advantageous effects:
In the embodiments of the present disclosure, it is feasible not to display the promotional information upon playing the video information based on the position of the promotional information in the video information, thereby avoiding compulsorily inserting the promotional information in the video information that is being played, reducing waste of the user's time, improving the efficiency of viewing the video, and bringing about nice viewing experience to the user. Hence, the technical solutions provided by the embodiments of the present disclosure can eliminate adverse influence exerted by inserting promotional information upon playing the video information in the prior art.

### Brief Description of Drawings

To describe technical solutions of embodiments of the present disclosure more clearly, figures to be used in the embodiments or in depictions regarding the prior art will be described briefly. Obviously, the figures described below are only some embodiments of the present disclosure. Those having ordinary skill in the art appreciate that other figures may be obtained from these figures without making inventive efforts.
Fig. 1 is an exemplary view of a system used in the technical solution provided by an embodiment of the present disclosure;
Fig. 2 is a flow chart of a method of processing promotional information according to an embodiment of the present disclosure;
Fig. 3 is a block diagram of an apparatus for processing promotional information according to an embodiment of the present disclosure.

### Detailed Description of Preferred Embodiments

Embodiments of the present disclosure are described in detail with reference to the figures to make technical solutions of the present disclosure more apparent.

It should be appreciated that embodiments described here are only partial embodiments of the present disclosure, not all embodiments. Based on embodiments in the present disclosure, all other embodiments obtained by those having ordinary skill in the art without making inventive efforts all fall within the protection scope of the present disclosure.

Terms used in embodiments of the present disclosure are only intended to describe specific embodiments, not to limit the present disclosure. Singular forms "a", "said" and "the" used in embodiments and claims of the present disclosure are also intended to include plural forms, unless other senses are clearly defined in the context.

It should be appreciated that the term "and/or" used in the text is only an association relationship depicting associated objects and represents that three relations might exist, for example, A and/or B may represents three cases, namely, A exists individually, both A and B coexist, and B exists individually. In addition, the symbol "/" in the text generally indicates associated objects before and after the symbol are in an "or" relationship.

Depending on the context, the word "if" as used herein may be construed as "at the time when..." or "when ..." or "responsive to determining" or "responsive to detecting". Similarly, depending on the context, phrases "if ... is determined" or "if ... (stated condition or event) is detected" may be construed as "when ... is determined" or "responsive to determining" or "when ... (stated condition or event) is detected" or "responsive to detecting (stated condition or event)".

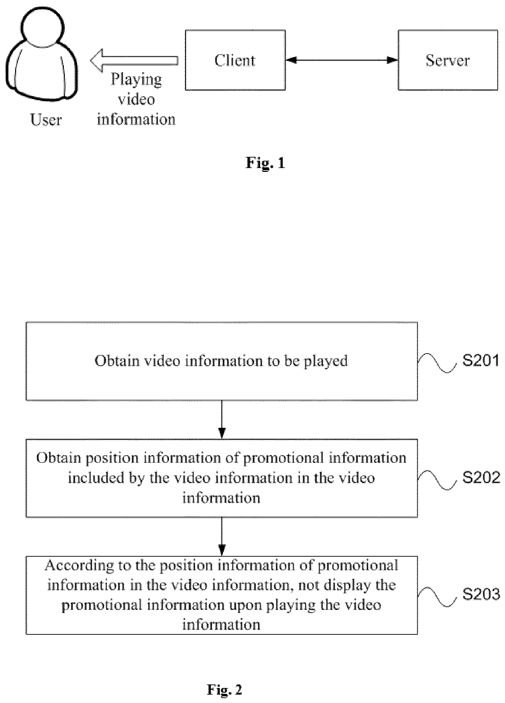

As shown in Fig. 1, the system used in technical solutions provided by embodiments of the present disclosure mainly comprises a client and a server, and the method and apparatus provided by embodiments of the present disclosure are implemented on the side of the client.

An embodiment of the present disclosure discloses a method of processing promotional information. Referring to Fig. 2, Fig. 2 is a flow chart of a method of processing promotional information according to an embodiment of the present disclosure. As shown in Fig. 2, the method comprises the following steps:
S201: obtaining video information to be played.
S202: obtaining position information of promotional information included by the video information in the video information.
S203: according to the position information of promotional information in the video information, not displaying the promotional information upon playing the video information.

Based on the method of processing the promotional information, the embodiment of the present disclosure specifically describes the step S201. The step may specifically comprise:
As shown in Fig. 1, the client may initiate a video play request to a server of a website providing the video information, and then receive the video information provided by the server, the video information serving as video information to be played on the client.

Or, the client may, based on the user's operation behavior, obtain locally-stored video information from a storage unit of a terminal where the client lies, as the video information to be played.

Based on the method of processing the promotional information, the embodiment of the present disclosure specifically describes the step S202. The step may specifically comprise:
In the embodiment of the present disclosure, after obtaining the video information to be played, the client needs to perform play delay processing for the video information because the client needs to take a certain time period to obtain the position information of promotional information included by the video information in the video information. Hence, after obtaining the video information to be played, the client does not directly play the video information.

Preferably, since the client needs to perform the above operation based on the video information, the client may, before playing the video information, play a waiting picture for a certain time period to perform play delay processing for the video information.

It may be appreciated that while playing the waiting picture, the client may perform the above processing for the promotional information.

For example, the client may play the waiting picture for 10 seconds and play the above video information upon completion of play of the waiting picture.

Preferably, the method of the client obtaining position information of promotional information included by the video information in the video information may comprise but is not limited to the following three methods:
The first type: first, the client obtains a correspondence relationship between the video information and the position information of the promotional information. Then, the client, based on the correspondence relationship, obtains the position information of the promotional information included by the video information in the video information.

It is feasible to pre-configure for the client the correspondence relationship between the video information and the position information of the promotional information so that after obtaining the video information to be played, the client may match the position information of the promotional information included by the video information in the video information, from the correspondence relationship according to an identifier of the video information.

The second type: first, the client obtains feature data of audio information included by the video information. Then, the client compares preset feature data of audio information included by the promotional information with the feature data of the audio information included by the video information, to obtain the position information of the promotional information included by the video information in the video information.

Preferably, as for the obtained video information, the client may use an audio extraction tool to extract the included audio information from the video information. Then, the client extracts feature data of the audio information from the audio information. Here, the client may, but is not limited to, extracting the feature data of the audio information with each frame as a unit, to thereby obtain the feature data of the audio information of each frame.

Preferably, the feature data of the audio information may comprise but is not limited to at least one of the following data: zero-crossing rate, Mel-frequency Cepstral Coefficients (MFCC), energy information, spectrum distribution, rhythm and key.

Preferably, it is feasible to configure a database of promotional information for the client, the database being used to store the feature data of the promotional information, for example, the feature data of the audio information included by the promotional information, feature data of image information included by the promotional information. As such, when the client extracts the feature data of the audio information of each frame from the audio information to be played, it may compare the feature data of the audio information of each frame with the feature data of the audio information included by the promotional information in the database, to thereby acquire whether the audio information to be played includes the promotional information, and thereby determine feature data of the audio information of which frames hits the feature data of the audio information in the database if the promotional information is included.

The third type: first, the client obtains feature data of image information included by the video information; then, compare the feature data of image information included by the preset promotional information with the feature data of image information included by the video information, to obtain position information of the promotional information included by the video information in the video information.

Preferably, as for the obtained video information, the client may use an image extraction tool to extract the included image information from the video information; then, the client extracts feature data of the image information from the image information; here, the client may comprise but is not limited to, extracting the feature data of the image information with each frame as a unit, to thereby obtain the feature data of the image information of each frame.

Preferably, the feature data of the image information may comprise but is not limited to feature points, types of feature points, positions of feature points and the like.

Preferably, it is feasible to pre-configure for the client the feature data of the image information included by the promotional information stored in the database of the promotional information. As such, after the client extracts the feature data of the image information of each frame extracted from the video information to be played, it may compare the feature data of the image information of each frame with the feature data of the image information included by the promotional information in the database, to thereby acquire whether the video information to be played includes the promotional information, and if the promotional information is included, determine feature data of the image information of which frames hits the feature data of the image information included by the promotional information in the database and thereby determine the position information of the promotional information in the video information.

Preferably, in the embodiment of the present disclosure, the position information of the promotional information included by the video information in the video information may be a play start moment and a play completion moment of the promotional information in the video information, or may be play start frame information and play completion frame information of the promotional information in the video information.

For example, a program schedule of A television station is pre-configured for the client. The program schedule includes program-related information and a position information of promotional information inserted in the program schedule. If the promotional information in a time length of one minute is inserted during play of each episode of TV series B, the client may find the TV series from the program schedule according to a Uniform Resource Locator (URL) of the TV series B, thereby knowing that the promotional information in a time length of one minute begins to be played from the twentieth minute of each episode of the TV series, thereby obtaining that the positional information of the promotional information included by each episode of the TV series in the episode includes the play start moment the twentieth minute and the play completion moment the twenty-first minute.

It needs to be appreciated that in the embodiment of the present disclosure, a format of the promotional information included by the video information may comprise but is not limited to at least one of the following information: video format, picture format and text format; the number of the promotional information included by the video information may be at least one.

Based on the method of processing the promotional information, the embodiment of the present disclosure specifically describes the step S203. The step may specifically comprise:
After determining a specific position of the promotional information in the video information, the client may not, based on the position information of the promotional information in the video information, display the promotional information upon playing the video information.

Preferably, in the embodiment of the present disclosure, the method of the client, based on the position information of the promotional information in the video information, not displaying the promotional information upon playing the video information may comprise but is not limited to the following two types:
The first type: based on the position information of the promotional information in the video information, the client performs fast-forward operation for the promotional information upon playing the video information, to remove the promotional information upon playing the video information, and in this way, filter away the promotional information from the video information to eliminate adverse influence exerted by the inserted promotional information upon playing the video information in the prior art.

For example, the client may determine a time interval of fast-forward operation based on a moment corresponding to the play start frame information and a moment corresponding to the play completion frame information. When the video information is played, if the play start frame of the promotional information is found from the video information that is being played based on the play start frame information, it is feasible to play the video information corresponding to the play start frame, then based on the time interval of the fast-forward operation, directly display the video information corresponding to the play completion frame information and implement execution of fast-forward operation for the promotional information so as to quickly skip the promotional information.

The second type: first, the client obtains multimedia resources to be played. Then, the client, based on the positional information of the promotional information in the video information, uses the multimedia resources to replace the promotional information upon playing the video information.

Preferably, the multimedia resources may comprise at least one of the following information: picture information, other video information and text information.

Preferably, it is feasible to pre-configure the multimedia resources for the client. The number of the multimedia resources may be at least one; if there are at least two multimedia resources, the client may randomly select at least one multimedia resource. This is not specifically limited by the embodiment of the present disclosure.

For example, the method of the client, based on the positional information of the promotional information in the video information, using the multimedia resources to replace the promotional information upon playing the video information may comprise but is not limited to: the client may consider the video information including the promotional information as a first play source and consider the obtained multimedia resource as a second play source. When the video information is played, if the play start moment or play start frame of the promotional information comes based on the position information of the promotional information in the video information, the client switches to the second play source and uses multimedia resources obtained by foreground play to display the promotional information at the background; when the play completion moment or play completion frame of the promotional information comes, the client switches back to the first play source and continues to play the video information at the foreground, thereby implementing using the multimedia resources to play in place of the promotional information.

It needs to be appreciated that a subject for executing S201-S203 may be an apparatus for processing the promotional information, and the apparatus may be an application located at a local terminal, or may further be a function unit such as a plug-in or Software Development Kit (SDK) located in the application of the local terminal. This is not specifically limited in the present embodiment of the present disclosure.

It may be understood that the application may be a native application (nativeAPP) installed on the terminal, or a web application (webAPP) of a browser on the terminal. This is not specifically limited in the embodiment of the present disclosure.

It needs to be appreciated that the terminal involved in the embodiment of the present disclosure comprises but is not limited to a Personal Computer (PC), a Personal Digital Assistant (PDA), a wireless handheld device, a tablet computer, a mobile phone, an MP3 player, an MP4 player and the like.

Embodiments of the present disclosure further provide an embodiment of an apparatus for implementing the steps and the step in the above method embodiments.

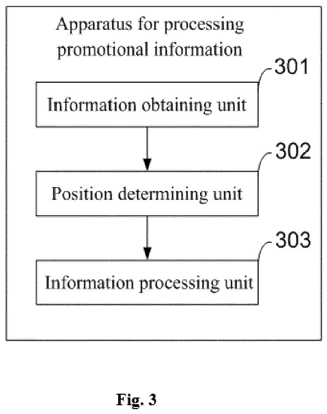

Referring to Fig. 3, Fig. 3 is a block diagram of an apparatus for processing promotional information according to an embodiment of the present disclosure. As shown in Fig. 3, the apparatus comprises:
an information obtaining unit 301 for obtaining video information to be played;
a position determining unit 302 for obtaining position information of promotional information included by the video information in the video information;
an information processing unit 303 for, according to the position information of promotional information in the video information, not displaying the promotional information upon playing the video information.

Preferably, the information obtaining unit 301 is specifically used to:
obtain a correspondence relationship between the video information and the position information of the promotional information;
based on the correspondence relationship, obtain the position information of the promotional information included by the video information in the video information.

Preferably, the information obtaining unit 301 is specifically configured to:
obtain feature data of the video information;
compare feature data of preset promotional information with the feature data of the video information, to obtain the position information of the promotional information included by the video information in the video information.

Preferably, the feature data of the video information is feature data of audio information included by the video information, and feature data of the promotional information is feature data of audio information included by the promotional information; or, the feature data of the video information is feature data of image information included by the video information, and feature data of the promotional information is feature data of image information included by the promotional information.

Preferably, the position information of the promotional information included by the video information in the video information comprises a play start moment and a play completion moment of the promotional information in the video information; or the position information of the promotional information included by the video information in the video information comprises play start frame information and play completion frame information of the promotional information in the video information.

Preferably, the information processing unit 303 is specifically configured to:
based on the position information of the promotional information in the video information, perform fast-forward operation for the promotional information upon playing the video information.

Preferably, the information processing unit 303 is specifically configured to:
obtain multimedia resources to be played;
based on the positional information of the promotional information in the video information, use the multimedia resources to replace the promotional information upon playing the video information;
wherein the multimedia resources may comprise at least one of the following information: picture information, other video information and text information.

Since units in the present embodiment can execute the method shown in Fig. 2, reference may be made to related depictions of Fig. 2 for portions not described in detail in the present embodiment.

The technical solutions of embodiments of the present disclosure have the following advantageous effects:
In the embodiments of the present disclosure, it is feasible not to display the promotional information upon playing the video information based on the position of the promotional information in the video information, thereby avoiding compulsorily inserting the promotional information in the video information that is being played, reducing waste of the user's time, improving the efficiency of viewing the video, and bringing about nice viewing experience to the user. Hence, the technical solutions provided by the embodiments of the present disclosure can eliminate adverse influence exerted by inserting promotional information upon playing the video information in the prior art.

Those skilled in the art can clearly understand that for purpose of convenience and brevity of depictions, reference may be made to corresponding procedures in the aforesaid method embodiments for specific operation procedures of the system, apparatus and units described above, which will not be detailed any more.

In the embodiments provided by the present disclosure, it should be understood that the revealed system, apparatus and method can be implemented through other ways. For example, the above-described embodiments for the apparatus are only exemplary, e.g., the division of the units is merely logical one, and, in reality, they can be divided in other ways upon implementation. For example, a plurality of units or components may be combined or integrated into another system, or some features may be neglected or not executed. In addition, mutual coupling or direct coupling or communicative connection as displayed or discussed may be indirect coupling or communicative connection performed via some interfaces, means or units and may be electrical, mechanical or in other forms.

The units described as separate parts may be or may not be physically separated, the parts shown as units may be or may not be physical units, i.e., they can be located in one place, or distributed in a plurality of network units. One can select some or all the units to achieve the purpose of the embodiment according to the actual needs.

Further, in the embodiments of the present disclosure, functional units can be integrated in one processing unit, or they can be separate physical presences; or two or more units can be integrated in one unit. The integrated unit described above can be implemented in the form of hardware, or they can be implemented with hardware plus software functional units.

The aforementioned integrated unit in the form of software function units may be stored in a computer readable storage medium. The aforementioned software function units are stored in a storage medium, including several instructions to instruct a computer device (a personal computer, server, or network equipment, etc.) or processor to perform some steps of the method described in the various embodiments of the present disclosure. The aforementioned storage medium includes various media that may store program codes, such as U disk, removable hard disk, read-only memory (ROM), a random access memory (RAM), magnetic disk, or an optical disk.

What are stated above are only preferred embodiments of the present disclosure, not intended to limit the disclosure. Any modifications, equivalent replacements, improvements and the like made within the spirit and principles of the present disclosure, should all be included in the present disclosure within the scope of protection.

## Claims

1. A method of processing promotional information, wherein the method comprises:
obtaining video information to be played;
obtaining position information of promotional information included by the video information in the video information;
according to the position information of promotional information in the video information, not displaying the promotional information upon playing the video information.

2. The method according to claim 1, wherein the obtaining position information of promotional information included by the video information in the video information comprises:
obtaining a correspondence relationship between the video information and the position information of the promotional information;
based on the correspondence relationship, obtaining the position information of the promotional information included by the video information in the video information.

3. The method according to claim 1 or 2, wherein the obtaining position information of promotional information included by the video information in the video information comprises:
obtaining feature data of the video information;
comparing feature data of preset promotional information with the feature data of the video information, to obtain the position information of the promotional information included by the video information in the video information.

4. The method according to claim 3, wherein
the feature data of the video information is feature data of audio information included by the video information, and feature data of the promotional information is feature data of audio information included by the promotional information; or,
the feature data of the video information is feature data of image information included by the video information, and feature data of the promotional information is feature data of image information included by the promotional information.

5. The method according to any one of claims 1-4, wherein
the position information of the promotional information included by the video information in the video information comprises a play start moment and a play completion moment of the promotional information in the video information; or
the position information of the promotional information included by the video information in the video information comprises play start frame information and play completion frame information of the promotional information in the video information.

6. The method according to any one of claims 1-5, wherein according to the position information of promotional information in the video information, not displaying the promotional information upon playing the video information comprises:
based on the position information of the promotional information in the video information, performing fast-forward operation for the promotional information upon playing the video information.

7. The method according to any one of claims 1-6, wherein according to the position information of promotional information in the video information, not displaying the promotional information upon playing the video information comprises:
obtaining multimedia resources to be played;
based on the positional information of the promotional information in the video information, using the multimedia resources to replace the promotional information upon playing the video information;
wherein the multimedia resources may comprise at least one of the following information: picture information, other video information and text information.

8. An apparatus for processing promotional information, wherein the apparatus comprises:
an information obtaining unit for obtaining video information to be played;
a position determining unit for obtaining position information of promotional information included by the video information in the video information;
an information processing unit for, according to the position information of promotional information in the video information, not displaying the promotional information upon playing the video information.

9. The apparatus according to claim 8, wherein the information obtaining unit is specifically configured to:
obtain a correspondence relationship between the video information and the position information of the promotional information;
based on the correspondence relationship, obtain the position information of the promotional information included by the video information in the video information.

10. The apparatus according to claim 8 or 9, wherein the information obtaining unit is specifically configured to:
obtain feature data of the video information;
compare feature data of preset promotional information with the feature data of the video information, to obtain the position information of the promotional information included by the video information in the video information.

11. The apparatus according to claim 10, wherein
the feature data of the video information is feature data of audio information included by the video information, and feature data of the promotional information is feature data of audio information included by the promotional information; or,
the feature data of the video information is feature data of image information included by the video information, and feature data of the promotional information is feature data of image information included by the promotional information.

12. The apparatus according to any one of claims 8-11, wherein
the position information of the promotional information included by the video information in the video information comprises a play start moment and a play completion moment of the promotional information in the video information; or
the position information of the promotional information included by the video information in the video information comprises play start frame information and play completion frame information of the promotional information in the video information.

13. The apparatus according to any one of claims 8-12, wherein the information processing unit is specifically configured to:
based on the position information of the promotional information in the video information, perform fast-forward operation for the promotional information upon playing the video information.

14. The apparatus according to any one of claims 8-13, wherein the information processing unit is specifically configured to:
obtain multimedia resources to be played;
based on the positional information of the promotional information in the video information, use the multimedia resources to replace the promotional information upon playing the video information;
wherein the multimedia resources may comprise at least one of the following information: picture information, other video information and text information.

15. An apparatus, comprising
one or more processors;
a memory;
one or more programs stored in the memory and configured to execute the following operations when executed by the one or more processors:
obtaining video information to be played;
obtaining position information of promotional information included by the video information in the video information;
according to the position information of promotional information in the video information, not broadcasting the promotional information upon playing the video information.

16. A non-volatile computer storage medium in which one or more programs are stored, an apparatus being enabled to execute the following operations when said one or more programs are executed by the apparatus:
obtaining video information to be played;
obtaining position information of promotional information included by the video information in the video information;
according to the position information of promotional information in the video information, not broadcasting the promotional information upon playing the video information.
